# EUROPÄISCHE PATENTSCHRIFT

(11) **EP 1 625 963 B1**
(45) Veröffentlichungstag und Bekanntmachung des Hinweises auf die Patenterteilung: **18.06.2008**
(21) Anmeldenummer: 05015487.1
(22) Anmeldetag: 16.07.2005
(51) Int. Cl.: B60K 15/035

(54) **Kraftstoffbehälter für ein Kfz**
Fuel tank for motor vehicle
Réservoir de carburant pour automobile

(30) Priorität: 11.08.2004 DE 102004039163
(43) Veröffentlichungstag der Anmeldung: 15.02.2006
(73) Patentinhaber: Kautex Textron GmbH & Co. KG., 53229 Bonn (DE)
(72) Erfinder: Bolle, Dirk, 53229 Bonn (DE); Treudt, Volker, 51570 Windeck (DE)
(74) Vertreter: Kierdorf, Theodor

(56) Entgegenhaltungen:
- EP-A- 1 332 906
- WO-A-97/33765
- US-A- 5 564 398
- US-A1- 2004 031 469
- US-B1- 6 230 693
- US-B1- 6 237 574
- PATENT ABSTRACTS OF JAPAN Bd. 1995, Nr. 09, 31. Oktober 1995 (1995-10-31) -& JP 07 151022 A (HONDA MOTOR CO LTD), 13. Juni 1995 (1995-06-13)
- PATENT ABSTRACTS OF JAPAN Bd. 1996, Nr. 01, 31. Januar 1996 (1996-01-31) -& JP 07 233766 A (TOYOTA MOTOR CORP), 5. September 1995 (1995-09-05)
- PATENT ABSTRACTS OF JAPAN Bd. 013, Nr. 373 (M-861), 18. August 1989 (1989-08-18) -& JP 01 125552 A (TOYOTA MOTOR CORP), 18. Mai 1989 (1989-05-18)

## Beschreibung

Die Erfindung betrifft einen Kraftstoffbehälter für ein Kfz mit Mitteln zur Förderung des Kraftstoffs zu einer Brennkraftmaschine des Kfz, mit einer mit Einfüllstutzen versehenen Einfüllöffnung, mit Mitteln zur Betankung und Betriebsentlüftung und mit wenigstens einem Kraftstoffdampffilter, über welches die Entlüftung des Kraftstoffbehälters erfolgt.

Bei Kraftstoffbehältern der eingangs beschriebenen Art erfolgt üblicherweise die Betankungs- und Betriebsentlüftung über ein Kraftstoffdampffilter, das als Aktivkohlefilter ausgebildet ist. Das kohlenwasserstoffbeladene Gas aus dem Kraftstoffbehälter wird in dem Kraftstoffdampffilter kondensiert, die in dem Kraftstoffdampffilter vorhandene Aktivkohle reichert sich mit Kohlenwasserstoffen an und die gereinigte Luft wird an die Atmosphäre abgegeben. Ist das Kraftstoffdampffilter mit Kohlenwasserstoffen gesättigt, erfolgt eine Rückspülung desselben, indem die Motoransaugluft über das Kraftstoffdampffilter geführt wird.

Grundsätzlich ist es wünschenswert, das Kraftstoffdampffilter so auszulegen, dass möglichst keine Kohlenwasserstoffe an die Atmosphäre gelangen. Trotz guter Wirkungsweise der bekannten Kraftstoffdampffilter gelingt es jedoch nicht, dies vollständig zu vermeiden. Die durch das Kraftstoffdampffilter an die Atmosphäre gelangenden Verunreinigungen werden im Fachjargon auch als sogenannte "bleed emissions" bezeichnet.

Der Effizienz des Kraftstoffdampffilters sind unter anderem deshalb gewisse Grenzen gesetzt, weil beim Betankungsvorgang je nach Füllgeschwindigkeit bis zu 60 1/min Gas aus dem Kraftstoffbehälter verdrängt werden müssen. Dieser Volumenstrom wird über das Kraftstoffdampffilter geführt. Je höher der Wirkungsgrad des Filters, desto höher ist auch dessen Durchströmungswiderstand, so dass das Kraftstofffilter eine gewisse Mindestdurchlässigkeit aufweisen muss, um ein vorzeitiges Abschalten der Zapfpistole beim Betankungsvorgang zu verhindern.

Um die Durchströmung des Kraftstoffdampffilters verhältnismäßig gering zu halten und damit auch dessen Beladung beim Betankungsvorgang in gewissen Grenzen zu halten, ist es bekannt, einen gewissen Teil des beim Betankungsvorgang verdrängten Gasvolumenstroms durch das Einfüllrohr zu rezirkulieren, und zwar mit einer sogenannten Rezirkulationsleitung. Eine solche Maßnahme erlaubt es allerdings nicht, das Kraftstoffdampffilter ohne Berücksichtigung_des bei der Betankung zu verdrängenden hohen Gasvolumenstroms auszulegen, um die "bleed emissions" des Kraftstoffdampffilters zu verringern, zumal auch dem Bauvolumen des Kraftstoffdampffilters gewisse Grenzen gesetzt sind.

Aus der US 5,564,398 ist ein Kraftstoffbehälter nach den Merkmalen des Oberbegriffs von Anspruch 1 bekannt. Auch dort ist ein Kraftstofffilter vorgesehen, das Mehrstufig ausgebildet ist, wobei die unterschiedlichen Stufen des Kraftstoffdampffilters einen unterschiedlichen Filterwiderstand aufweisen. Im Betankungsfall wird nur ein Teil des Kraftstoffdampffilters durchströmt, um eine vorzeitige Abschaltung des Zapfventils bei der Betankung hoher Volumenströme zu verhindern. Die verschiedenen Stufen des Kraftstoffdampffilters bzw. die in verschiedenen Gehäusen angeordneten Kraftstoffdampffilter mit unterschiedlichem Durchströmungswiderstand sind über ein Umschaltventil miteinander verbunden, das abhängig vom Betriebszustand des Kraftfahrzeuges geschaltet wird.

Der Erfindung liegt die Aufgabe zugrunde, einen Kraftstoffbehälter der eingangs genannten Art konstruktiv zu vereinfachen.

Die Aufgabe wird mit den Merkmalen des Anspruchs 1 gelöst.

Vorzugsweise ist die zweite Filterstufe als Feinreinigungsstufe ausgebildet. Der Durchströmungswiderstand der zweiten Filterstufe kann demjenigen der ersten Filterstufe entsprechen, so dass der Durchströmungswiderstand durch beide Stufen des Kraftstoffdampffilters in Summe erhöht ist, es kann jedoch auch vorgesehen sein, dass die zweite Filterstufe wie vorstehend erwähnt als Feinreinigungsstufe ausgebildet ist, in diesem Falle ist der Durchströmungswiderstand der zweiten Filterstufe höher als derjenige der ersten Filterstufe.

Zweckmäßigerweise mündet die Betankungsentlüftungsleitung hinter der ersten Filterstufe über ein schaltbares Betankungsventil in die Atmosphäre. Dieses Betankungsventil kann betätigungslos geschlossen sein. Wenn das Betankungsventil währen des normalen Betriebs des Kfz geschlossen ist, werden die aufgrund von Temperaturschwankungen und Schwallbewegungen im Kraftstoffbehälter erzeugten Gase vollständig über beide Stufen des Kraftstoffdampffilters geführt.

Zweckmäßigerweise ist an die zweite Filterstufe eine Betriebsentlüftungsleitung angeschlossen, die über ein betätigungslos offenes, schaltbares Diagnoseventil in die Atmosphäre mündet. Bei geschlossenem Diagnoseventil ist die zweite Filterstufe abgesperrt und die aus dem Kraftstoffbehälter austretenden Gase werden nur über die erste Filterstufe und die Betankungsentlüftungsleitung geführt.

Anstelle eines Betankungsventils in der Betankungsentlüftungsleitung mündet die Betankungsentlüftungsleitung in den Einfüllstutzen, so dass dort der Tankverschluss die Funktion des Betankungsventils übernimmt. Bei aufgesetztem Tankverschluss ist die Betankungsentlüftungsleitung zur Atmosphäre geschlossen und alle aus dem Kraftstoffbehälter abgegebenen Gase werden über beide Stufen des Kraftstoffdampffilters geführt.

Dabei ist es zweckmäßig, wenn die Betankungsentlüftungsleitung in den Einfüllstutzen in Strömungsrichtung des einzufüllenden Kraftstoffs stromaufwärts einer Abdichtung für die Zapfpistole mündet, damit die bei der Betankung aus der Betankungsentlüftungsleitung austretende gereinigte Luft nicht durch den Kraftstoffbehälter rezirkuliert wird.

Um ein Rückströmen der Kraftstoffdämpfe aus dem Einfüllrohr in das Kraftstoffdampffilter zu verhindern, ist in der Betankungsentlüftungsleitung hinter dem Kraftstoffdampffilter zweckmäßigerweise ein Rückschlagventil vorgesehen.

Wenn der Tankverschluss so ausgebildet ist, dass dieser auch eine Versperrung der Mündung der Betankungsentlüftungsleitung bewirkt, kann auf das Rückschlagventil verzichtet werden.

Bei einer Variante des erfindungsgemäßen Kraftstoffbehälters kann das Diagnoseventil in der Betriebsentlüftungsleitung betätigungslos geschlossen sein, wobei dieses dann über ein Druckhalteventil überbrückt ist. Über das Druckhalteventil erfolgt eine Absperrung der zweiten Filterstufe bzw. der Betriebsentlüftungsleitung.

Zu dem Druckhalteventil kann parallel in der Betriebsentlüftungsleitung ein Rückschlagventil vorgesehen sein, das ein Rückspülen des Kraftstoffdampffilters während des Betriebs des Kfz ermöglicht.

Die Erfindung wird nachstehend anhand zweier in den Zeichnungen dargestellter Ausführungsbeispiele erläutert.

Es zeigen:
- Fig. 1: eine schematische Darstellung eines Kraftstoffbehälters, der nicht Teil der Erfindung ist,
- Fig. 2: ein Ausführungsbeispiel des erfindungsgemäßen Kraftstoffbehälters,
- Fig. 3: das in Figur 2 dargestellte Ausführungsbeispiel mit einem modifizierten OBD Ventil.

In den Figuren ist der Kraftstoffbehälter 1 schematisch im Zusammenwirken mit dem Kraftstoffdampffilter 2 und einer Brennkraftmaschine 3 des Kfz dargestellt. Das Kraftstoffdampffilter 2 und die zugehörigen Leitungen sowie Ventile sind Bestandteile des Kraftstoffbehälters 1, diese müssen nicht notwendigerweise außerhalb des Kraftstoffbehälters 1 angeordnet sein, vielmehr können diese auch innerhalb des Kraftstoffbehälters 1 angeordnet sein. Aus Gründen der übersichtlicheren Darstellung ist hier beispielsweise die Anordnung des Kraftstoffdampffilters und der Leitungen sowie Ventile außerhalb des Behältervolumens gezeichnet.

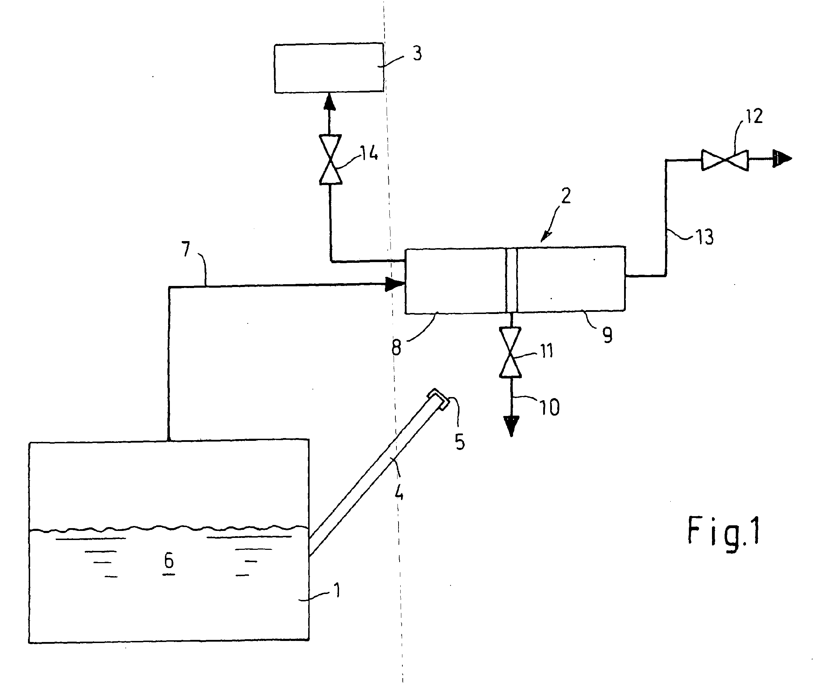

Der mit 1 bezeichnete Kraftstoffbehälter wird üblicherweise über einen Einfüllstutzen 4 mit einem Deckelverschluss 5 betankt. Der eingeführte Kraftstoff 6 verdrängt bei der Betankung das oberhalb desselben befindliche Luft/Kraftstoffdampf-Gemisch, welches über eine Entlüftungsleitung 7 dem Kraftstoffdampffilter 2 zugeführt wird. Das Kraftstoffdampffilter umfasst erfindungsgemäß eine erste Filterstufe 8 und eine zweite Filterstufe 9. Hinter der ersten Filterstufe 8 ist bei dem in Figur 1 gezeigten Ausführungsbeispiel eine Betankungsentlüftungsleitung 10 unmittelbar an die Atmosphäre geführt.

Die Betankungsentlüftungsleitung 10 ist über ein Betankungsventil 11 absperrbar. Dieses Betankungsventil 11 ist betätigungslos geschlossen. Wird der Betankungsvorgang eingeleitet, so wird das Betankungsventil 11 geöffnet, beispielsweise durch Öffnen des Deckelverschlusses 5, so dass das bei der Betankung des Kfz aus dem Kraftstoffbehälter 1 durch den Betankungsvorgang verdrängte Gasvolumen ausschließlich über die erste Filterstufe 8 geführt wird und über die Betankungsentlüftungsleitung gereinigt in die Atmosphäre abgegeben wird. Bei diesem Vorgang kann die zweite Filterstufe 9 mittels eines Diagnoseventils 12 in einer Betriebsentlüftungsleitung 13 abgesperrt werden, so dass die gesamte Menge des beim Betankungsvorgangs verdrängten Gases über die erste Filterstufe 8 geführt wird. Dies ist nicht notwendigerweise erforderlich, vielmehr kann das Diagnoseventil 12 auch geöffnet sein, so dass die über die erste Filterstufe 8 geführte Gasmenge sich entsprechend der Durchströmungswiderstände der Filterstufen 8 und 9 einstellt. Bei dem beschriebenen Ausführungsbeispiel ist die zweite Filterstufe 9 als Feinreinigungsstufe mit einem deutlich höheren Durchströmungswiderstand als die erste Filterstufe 8 ausgebildet. Alternativ kann der Durchströmungswiderstand der zweiten Filterstufe 9 dem Durchströmungswiderstand der ersten Filterstufe 8 entsprechen, so dass in Summe der Durchströmungswiderstand beider Filterstufen 8 und 9 erhöht ist. Auch in diesem Falle würde das bei der Betankung verdrängte gereinigte Gas bei geöffnetem Betankungsventil 11 über die Betankungsentlüftungsleitung 10 an die Atmosphäre abgegeben, auch bei geöffnetem Diagnoseventil 12.

Bei Betrieb des Kfz wird das Diagnoseventil 12 nach erfolgter Dichtigkeitsprüfung des Kraftstoffbehälters 1 geöffnet, wohingegen das Betankungsventil 11 geschlossen wird.

Das Diagnoseventil 12 dient dazu, den Kraftstoffbehälter 1 zwecks Dichtigkeitsüberprüfung (on board Diagnose) hermetisch abzuriegeln, um diesen unter Überdruck oder Unterdruck zu setzen. Kann der vorgewählte Überdruck oder Unterdruck nicht gehalten werden, ist eine Leckage vorhanden.

Während des Fahrbetriebs des Kfz durch Schwallbewegungen des Kraftstoffs 6 oder durch Temperaturschwankungen erzeugte Gase werden über die Entlüftungsleitung 7 und über beide Stufen 8 und 9 des Kraftstoffdampffilters 2 und über die Betriebsentlüftungsleitung 13 gereinigt an die Atmosphäre abgegeben.

Mit 14 ist ein Rückspülventil bezeichnet (purge Ventil), welches die Rückspülleitung 15 zur Brennkraftmaschine 2 freigibt, und zwar zur Regenerierung des Kraftstoffdampffilters 2. In diesem Falle wird von der Brennkraftmaschine 3 Verbrennungsluft über die Betriebsentlüftungsleitung 13 und das Kraftstoffdampffilter 2 angesaugt.

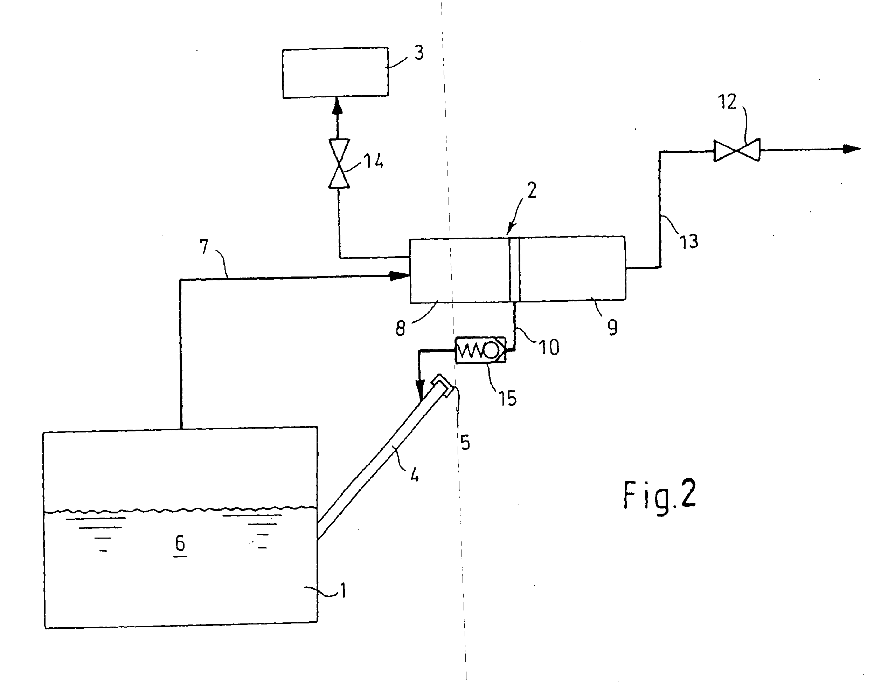

Das in Figur 2 dargestellte Ausführungsbeispiel des Kraftstoffbehälters 1 gemäß der Erfindung unterscheidet sich von dem in Figur 1 dargestellten dahingehend, dass ein schaltbares Betankungsventil in der Betankungsentlüftungsleitung 10 nicht vorhanden ist. Vielmehr mündet die Betankungsentlüftungsleitung 10 in den Einfüllstutzen 4, und zwar kurz unterhalb des Deckelverschlusses 5 sowie in Strömungsrichtung des eingefüllten Kraftstoffs oberhalb einer Abdichtung bzw. Halterung für die Zapfpistole. Der Deckelverschluss 5 übernimmt in diesem Fall die Funktion des zuvor beschriebenen schaltbaren Betankungsventils 11. Wird nach dem Betankungsvorgang der Deckelverschluss 5 auf den Einfüllstutzen 4 aufgesetzt, ist die Betankungsentlüftungsleitung (10) versperrt, so dass die dann von dem Kraftstoffbehälter 1 abgegebenen Kraftstoffdämpfe über die erste und zweite Filterstufe 8, 9 des Kraftstoffdampffilters 2 geführt werden. Damit ein Rückströmen von Kraftstoffdämpfen aus dem Einfüllstutzen 4 verhindert wird, ist in der Betankungsentlüftungsleitung 10 ein Rückschlagventil 15 vorgesehen.

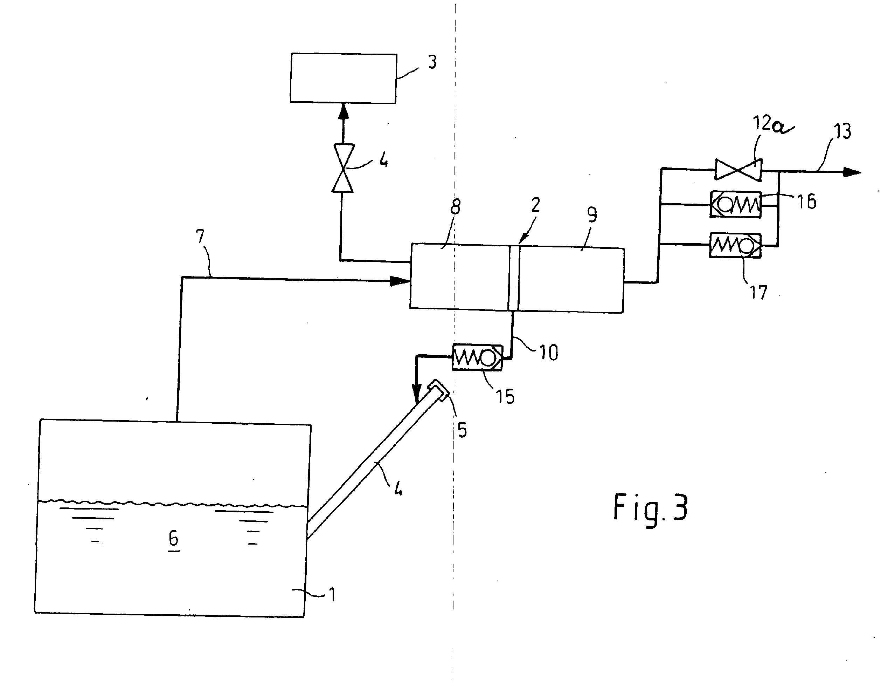

Die in Figur 3 dargestellte Schaltung unterscheidet sich nicht grundsätzlich von der in Figur 2 dargestellten. Hier ist lediglich das Diagnoseventil 12 a in der Betriebsentlüftungsleitung 13 mit einem parallel geschalteten Druckhalteventil 16 überbrückt. In diesem Fall ist das Diagnoseventil 12 a stromlos geschlossen, wohingegen das Diagnoseventil 12 a bei der in Figur 2 beschriebenen Schaltung stromlos geöffnet ist. Bei der in Figur 3 beschriebenen Schaltung wird das Diagnoseventil 12 a bei der Dichtigkeitsprüfung zunächst einmal geöffnet, um den Kraftstoffbehälter 1 drucklos zu stellen. Sodann wird das Diagnosesystem 12 a geschlossen, der Kraftstoffbehälter 1 wird mit Druck beaufschlagt oder unter Unterdruck gesetzt, um die Dichtigkeit des Systems zu prüfen. Ansonsten ist das Diagnoseventil 12 a geschlossen.

Mit 17 ist ein weiteres Rückschlagventil bezeichnet, das parallel zu dem Diagnoseventil 12 a und parallel zu dem Druckhalteventil 16 in der Betankungsentlüftungsleitung 13 geschaltet ist. Dieses Rückschlagventil 17 ermöglicht eine Rückspülung des Kraftstoffdampffilters 2 gegen einen leichten Gegendruck.

An dieser Stelle sei nochmals erwähnt, dass die Zeichnungen selbstverständlich nur Schaltbilder darstellen, beispielsweise können die Funktionen der Ventile 12 a, 16 und 17 in einem einzigen Ventil vereinigt sein.

### Bezugszeichenliste

- 1: Kraftstoffbehälter
- 2: Kraftstoffdampffilter
- 3: Brennkraftmaschine
- 4: Einfüllstutzen
- 5: Deckelverschluss
- 6: Kraftstoff
- 7: Entlüftungsleitung
- 8: erste Filterstufe
- 9: zweite Filterstufe
- 10: Betankungsentlüftungsleitung
- 11: Betankungsventil
- 12, 12 a: Diagnoseventile
- 13: Betriebsentlüftungsleitung
- 14: Rückspülventil
- 15: Rückschlagventil
- 16: Druckhalteventil
- 17: Rückschlagventil

## Patentansprüche

1. Kraftstoffbehälter (1) für ein Kfz mit Mitteln zur Förderung des Kraftstoffs zu einer Brennkraftmaschine des Kfz, mit einer mit Einfüllstutzen (4) versehenen Einfüllöffnung, mit Mitteln zur Betankungs- und Betriebsentlüftung und mit wenigstens einem Kraftstoffdampffilter (2), über welches die Entlüftung des Kraftstoffbehälters (1) erfolgt, wobei das Kraftstoffdampffilter (2) zweistufig mit einer in Strömungsrichtung der Entlüftung gesehenen ersten und zweiten Filterstufe (8, 9) ausgebildet ist, wobei die erste Filterstufe (8) einen geringeren Durchströmungswiderstand aufweist als die erste und zweite Filterstufe (8, 9) oder die zweite Filterstufe (9) und wobei eine Betankungsentlüftungsleitung (10) hinter der ersten Filterstufe (8) abgezweigt ist, **dadurch gekennzeichnet dass** die Betankungsentlüftungsleitung (10) in den Einfüllstutzen (4) in Strömungsrichtung des einzufüllenden Kraftstoffs stromaufwärts einer Abdichtung oder Halterung für die Zapfpistole mündet.

2. Kraftstoffbehälter nach Anspruch 1, **dadurch gekennzeichnet, dass** die zweite Filterstufe (9) als Feinreinigungsstufe ausgebildet ist.

3. Kraftstoffbehälter nach einem der Ansprüche 1 und 2, **dadurch gekennzeichnet, dass** an die zweite Filterstufe (9) eine Betriebsentlüftungsleitung (13) angeschlossen ist, die über ein betätigungslos offenes schaltbares Diagnoseventil (12) in die Atmosphäre mündet.

4. Kraftstoffbehälter nach Anspruch 1, **dadurch gekennzeichnet, dass** die Betankungsentlüftungsleitung (10) in den Einfüllstutzen (4) in Strömungsrichtung des einzufüllenden Kraftstoffs stromaufwärts einerAbdichtung oder Halterung der Zapfpistole mündet.

5. Kraftstoffbehälter nach Anspruch 1 oder 4, **dadurch gekennzeichnet, dass** in der Betankungsentlüpftungsleitung (10) hinter dem Kraftstoffdampffilter ein Rückschlagventil (15) vorgesehen ist.

6. Kraftstoffbehälter nach Anspruch 5, **dadurch gekennzeichnet, dass** das Diagnoseventil (12 a) betätigungslos geschlossen ist und über ein Druckhalteventil (16) überbrückt ist.

7. Kraftstoffbehälter nach Anspruch 6, **dadurch gekennzeichnet, dass** in der Betriebsentlüftungsleitung (13) ein parallel zu dem Druckhalteventil (16) geschaltetes Rückschlagventil (17) vorgesehen ist.

## Claims

1. A fuel tank (1) for a motor vehicle comprising means for conveying the fuel to an internal combustion engine of the motor vehicle, a filling opening provided with a filling connection (4), means for refuelling and operational venting and at least one fuel vapour filter (2) by way of which venting of the fuel tank (1) is effected, wherein the fuel vapour filter (2) is of a two-stage configuration with first and second filter stages (8, 9) as viewed in the direction of flow of venting, wherein the first filter stage (8) is of a lower flow resistance therethrough than the first and second filter stages (8, 9) or the second filter stage (9) and wherein a refuelling venting conduit (10) is branched off after the first filter stage (8), **characterised in that** the refuelling venting conduit (10) communicates with the filling connection (4) upstream of a seal or holder for the refuelling gun in the direction of flow of the fuel to be introduced.

2. A fuel tank according to claim 1 **characterised in that** the second filter stage (9) is in the form of a fine cleaning stage.

3. A fuel tank according to one of claims 1 and 2 **characterised in that** connected to the second filter stage (9) is an operational venting conduit (13) which communicates with the atmosphere by way of a switchable diagnosis valve (12) which is open in the non-actuated state.

4. A fuel tank according to claim 1 **characterised in that** the refuelling venting conduit (10) communicates with the filling connection (4) upstream of a seal or holder for the refuelling gun in the direction of flow of the fuel to be introduced.

5. A fuel tank according to claim 1 or claim 4 **characterised in that** a check valve (15) is provided in the refuelling venting conduit (10) after the fuel vapour filter.

6. A fuel tank according to claim 5 **characterised in that** the diagnosis valve (12a) is closed in the non-actuated state and is bridged over by way of a pressure-maintaining valve (16).

7. A fuel tank according to claim 6 **characterised in that** a check valve (17) connected in parallel relationship with the pressure-maintaining valve (16) is provided in the operational venting conduit (13).

## Revendications

1. Réservoir de carburant (1) pour un véhicule automobile avec des moyens pour acheminer le carburant à un moteur à combustion interne du véhicule automobile, avec une ouverture de remplissage munie de tubulure de remplissage (4), avec des moyens pour l'aération de fonctionnement et de remplissage et avec au moins un filtre à vapeur de carburant (2), par le biais duquel s'effectue l'aération du réservoir de carburant (1), le filtre à vapeur de carburant (2) étant à deux niveaux avec un premier et un second niveaux de filtration (8, 9), vu dans le sens d'écoulement de l'aération, le premier niveau de filtration (8) présentant une résistance au passage plus faible que le premier et le second niveaux de filtration (8, 9) ou le second niveau de filtration (9) et une conduite d'évacuation d'air de remplissage (10) étant dérivée derrière le premier niveau de filtration (8), **caractérisé en ce que** la conduite d'évacuation d'air de remplissage (10) débouche dans la tubulure de remplissage (4) dans le sens d'écoulement du carburant à verser, en amont d'une étanchéité ou d'un support pour le pistolet distributeur.

2. Réservoir de carburant selon la revendication 1, **caractérisé en ce que** le second niveau de filtration (9) est réalisé en tant qu'étape d'épuration fine.

3. Réservoir de carburant selon l'une quelconque des revendications 1 et 2, **caractérisé en ce qu'**une conduite d'évacuation d'air de fonctionnement (13) qui débouche à l'atmosphère par le biais d'une vanne de diagnostic (12) ouverte, commutable, sans actionnement, est raccordée au second niveau de filtration (9).

4. Réservoir de carburant selon la revendication 1, **caractérisé en ce que** la conduite d'évacuation d'air de remplissage (10) débouche dans la tubulure de remplissage (4) dans le sens d'écoulement du carburant à verser, en amont d'une étanchéité ou d'un support du pistolet distributeur.

5. Réservoir de carburant selon la revendication 1 ou 4, **caractérisé en ce qu'**il est prévu un clapet anti-retour (15), dans la conduite d'évacuation d'air de remplissage (10), derrière le filtre à vapeur de carburant.

6. Réservoir de carburant selon la revendication 5, **caractérisé en ce que** la vanne de diagnostic (12a) est fermée sans actionnement et est associée à une soupape de maintien de pression (16).

7. Réservoir de carburant selon la revendication 6, **caractérisé en ce qu'**il est prévu un clapet anti-retour (17) monté en parallèle à la soupape de maintien de pression (16) dans la conduite d'évacuation d'air de fonctionnement (13).
